# EUROPÄISCHE PATENTSCHRIFT

(11) **EP 1 472 310 B1**
(45) Veröffentlichungstag und Bekanntmachung des Hinweises auf die Patenterteilung: **01.04.2009**
(21) Anmeldenummer: 02792812.6
(22) Anmeldetag: 27.11.2002
(51) Int. Cl.: C08J 9/14

(54) **GEMISCHE MIT 1,1,1,3,3-PENTAFLUORBUTAN UND 1,1,1,2,3,3,3-HEPTAFLUORPROPAN**
MIXTURES COMPRISING 1,1,1,3,3-PENTAFLUOROBUTANE AND 1,1,1,2,3,3,3-HEPTAFLUOROPROPANE
MELANGE COMPRENANT DU 1,1,1,3,3-PENTAFLUOROBUTANE ET DU 1,1,1,2,3,3,3-HEPTAFLUOROPROPANE

(30) Priorität: 30.01.2002 DE 10203779
(43) Veröffentlichungstag der Anmeldung: 03.11.2004
(73) Patentinhaber: Solvay Fluor GmbH, 30173 Hannover (DE)
(72) Erfinder: ZIPFEL, Lothar, 30880 Laatzen (DE); BÖRNER, Karsten, 31319 Sehnde (DE); RECKE, Dierk-Ingolf, 31515 Wunstorf (DE)
(74) Vertreter: Jacques, Philippe
(86) Internationale Anmeldenummer: PCT/EP2002/013344
(87) Internationale Veröffentlichungsnummer: WO 2003/064508

(56) Entgegenhaltungen:
- EP-A- 1 219 674
- WO-A-01/72880

## Beschreibung

Die vorliegende Erfindung betrifft Gemische mit 1,1,1,3,3-Pentafluorbutan (R-365mfc)und mindestens zwei weiteren Fluorkohlenwasserstoffen und ihre Verwendung bei der Herstellung geschäumter Kunststoffe.

Es ist bereits bekannt, teilfluorierte Kohlenwasserstoffe als Treibgase für die Herstellung von geschäumten Kunststoffen zu verwenden.

Die internationale Patentanmeldung WO 98/27145 offenbart die Verwendung von Treibmittelgemischen, die 1,1,1,3,3-Pentafluorbutan und weitere Fluorkohlenwasserstoffverbindungen und gegebenenfalls weitere Treibmittel wie Kohlendioxid enthalten, im Rahmen der Schaumstoffherstellung.

WO 01/72880 offenbart ein Verfahren zur Herstellung von Integralschäumen unter Verwendung von Pentafluorbutan als Treibmittel. Dies kann zusammen mit mindestens einem weiteren Treibmittel aus der Gruppe 1,1,1,2-Tetrafluorethan, 1,1,1,2,3,3,3-Heptafluorpropan, 1,1,1,3,3,3-hexafluorpropan und 1,1,1, 3,3-Pentafluorpropan eingesetzt werden. Generell, so heißt es in der genannten internationalen Anmeldung, wird 1,1,1,2-Tetrafluorethan oder 1,1,1,2,3,3,3-Heptafluorpropan zu Pentafluorbutan zugegeben, um eine nicht brennbare Mischung zu ergeben.

Aufgabe der vorliegenden Erfindung ist es, bezüglich des Flammpunktes weiter verbesserte Gemische anzugeben, mit welchen sich beispielsweise geschäumte Kunststoffe mit qualitativ vorteilhaften Eigenschaften auf einfachere Weise erzeugen lassen.

Diese Aufgabe wird durch die vorliegende Erfindung gelöst.

Erfindungsgemäße, als Treibgas für die Herstellung geschäumter Kunststoffe brauchbare, Treibmittelmischung, enthalten oder bestehen aus
A) 1,1,1,3,3-Pentafluorbutan und
B) 1,1,1,2,3,3,3-Heptafluorpropan und
C) 1,1,1,2-Tetrafluorethan und/oder 1,1,1,3,3-Pentafluorpropan,
mit den folgenden Maßgaben:
a) pro 100 Gewichtsteile der Treibmittelmischung entfallen 65 bis 85 Gewichtsteile, vorzugsweise 75 bis 85 Gewichtsteile, auf die Summe der Komponenten A) und B);
b) pro 100 Gewichtsteile der unter a) genannten Summe der Komponenten A) und B) entfallen 80 bis 95 Gewichtsteile, vorzugsweise 83 bis 90 Gewichtsteile, auf 1,1,1,3,3-Pentafluorbutan, der Rest der Summe von A) und B) wird von 1,1,1,2,3,3,3-Heptafluorpropan gebildet;
c) pro 100 Gewichtsteile der Treibmittelmischung entfallen mindestens 15 Gewichtsteile auf die Komponente C).

Bevorzugte Treibmittelgemische sind **dadurch gekennzeichnet, daß** sie aus den Komponenten A), B) und C) bestehen, wobei pro 100 Gewichtsteile der Treibmittelmischung 70 bis 80 Gewichtsteile auf die Summe der Komponenten A) und B) entfallen und 20 bis 30 Gewichtsteile auf die Komponente C).

1,1,1,3,3,-Pentafluorbutan liegt an der Grenze zur Entflammbarkeit; die erfindungsgemäßen Gemische sind auch gegenüber bekannten Gemischen mit HFC-365mfc in Bezug auf die Entflammbarkeit verbessert. Sie eignen sich besonders zur Anwendung als Treibgas für die Herstellung von geschäumten Kunststoffen mit sehr guten Dämmwerten, können aber auch für andere Zwecke wie beispielsweise als Kälte-, Lösungs- oder Reinigungsmittel eingesetzt werden.

Besonders gute Treibmittelmischungen bestehen aus 80 Gew.-% eines Gemisches von 87 Gewichtsteilen HFC-365mfc und 13 Gewichtsteilen HFC-227ea; die restlichen 20 Gew.-% bestehen aus 1,1,1,3,3-Pentafluorpropan, HFC-134a oder einem Gemisch der beiden.

Die erfindungsgemäßen Gemische eignen sich besonders gut als Treibgas für die Herstellung von geschäumten Kunststoffen, beispielsweise auch nach dem Extrusionsverfahren. Bei diesem Verfahren werden die das Treibmittel enthaltenden Thermoplast-Kunststoffe direkt zu geschäumten Platten, Folien oder Profilen extrudiert. Die Kunststoffmasse schäumt unmittelbar nach Verlassen der Düse auf. Beispielsweise lassen sich XPS- und XPE-Schaumstoffe (Polystyrol- bzw. Polyethylen basierte Schaumstoffe) herstellen.

Besonders gut geeignet sind die erfindungsgemäßen Gemische zur Herstellung von Schaumstoffen auf Basis von Isocyanaten. Sie eignen sich sehr gut bei der Herstellung von insbesondere Hart-, aber auch Weichschäumen auf Isocyanat-Basis, auch für Integralschäume.

Die Herstellung von Schaumstoffen auf Isocyanat-Basis ist bekannt. Ihre Herstellung und die dafür verwendbaren Grundmaterialien werden beispielsweise in der Europäischen Patentanmeldung EP-A-0 381 986; in "Ullmanns Encyclopedia of Industrial Chemistry", 5. Auflage, Band A 21, Seiten 665 bis 680; den internationalen Patentanmeldungen WO 92/00345, 96/30439, 96/14354 und der deutschen Offenlegungsschrift DE 44 22 714 A1 offenbart.

Als Ausgangskomponenten können aliphatische, cycloaliphatische, araliphatische, aromatische und heterocyclische Polyisocyanate beispielsweise mit 2 bis 4 Isocyanat-Gruppen eingesetzt werden. Sie weisen einen aliphatischen Kohlenwasserstoffrest mit bis zu 18 C-Atomen, einen cycloaliphatischen Kohlenwasserstoffrest mit bis zu 15 C-Atomen, einen aromatischen Kohlenwasserstoffrest mit 6 bis 15 C-Atomen oder einen araliphatischen Kohlenwasserstoffrest mit 8 bis 15 C-Atomen auf. Technisch besonders bevorzugte Ausgangskomponenten sind beispielsweise 2,4- und 2,6-Toluylendiisocyanat, Diphenylmethandiisocyanat, Polymethylenpolyphenylisocyanat und deren Mischungen. Es können auch sogenannte "modifizierte Polyisocyanate" eingesetzt werden, welche Carbodiimidgruppen, Urethangruppen, Allophanatgruppen, Isocyanuratgruppen, Harnstoffgruppen oder Biuretgruppen enthalten.

Weitere Ausgangskomponenten sind Verbindungen mit mindestens 2 gegenüber Isocyanaten reaktionsfähigen Wasserstoffatomen. Es handelt sich insbesondere um Verbindungen mit einem Molekulargewicht von 400 bis 10.000, welche vorzugsweise 2 bis 8 Hydroxylgruppen aufweisen und außerdem Aminogruppen, Thiolgruppen oder Carboxylgruppen aufweisen können. Besonders gut geeignet sind Polyether, Polyester, Polycarbonate und Polyesteramide, die 2 bis 8 Hydroxylgruppen aufweisen.

Gegebenenfalls können auch Verbindungen als Ausgangskomponente eingesetzt werden, die als Kettenverlängerungsmittel oder Vernetzungsmittel dienen und vorzugsweise 2 bis 8 gegenüber Isocyanaten reaktionsfähige Wasserstoffatome aufweisen. Üblicherweise haben solche Mittel ein Molekulargewicht von 32 bis 400. Anstelle oder zusätzlich zu Hydroxylgruppen können auch Aminogruppen, Thiolgruppen bzw. Carboxylgruppen vorhanden sein.

Gegebenenfalls können weitere Hilfs- und Zusatzmittel mitverwendet werden. Beispielsweise kann man zusätzlich chemische Treibmittel wie Wasser einsetzen. Einsetzbar sind auch Katalysatoren wie beispielsweise tertiäre Amine, wie Dimethylcyclohexylamin, und/oder organische Metallverbindungen wie beispielsweise Zinnsalze von Carbonsäuren. Es können oberflächenaktive Zusatzstoffe wie Emulgatoren oder Schaumstabilisatoren, beispielsweise Siloxanpolyethercopolymere, Reaktionsverzögerer, Zellregler wie Parafine, Fettalkohole oder Dimethylpolysiloxane, Pigmente, Farbstoffe, Flammschutzmittel wie Phosphatester oder Phosphonatester, wie beispielsweise Trischloriso-propyl-phosphat eingesetzt werden. Einsetzbar sind weiterhin Stabilisatoren gegen Alterungs- und Witterungseinflüsse, Weichmacher, Füllstoffe, Farbstoffe, Antistatika, Nukleisierungsmittel, Porenreglersubstanzen oder biozid wirksame Wirkstoffe.

Gut geeignete Katalysatoren sind beispielsweise in der internationalen Patentanmeldung WO 96/14354 genannt. Dazu zählen organische Amine, Aminoalkohole und Aminoether wie Morpholinverbindungen, beispielsweise Dimethylcyclohexylamin, Diethanolamin, 2-Dimethylaminoethyl-3-dimethylaminopropylether, 2-Dimethylaminoethylether, 2,2-Dimorpholinodiethylether, N,N-Dimethylaminoethylmorpholin, N-Dimethylmorpholin. Auch metallorganische Verbindungen wie beispielsweise Zinn-, Kobalt- oder Eisenverbindungen sind brauchbar als Katalysator. Einsetzbar ist beispielsweise Zinndioctoat, Kobaltnaphthenat, Dibutylzinndilaurat und Eisenacetonylacetat.

Die Treibmittel können als solche, also ohne die vorstehend genannten Hilfs- und Zusatzstoffe eingesetzt werden. Gemäß einer Ausführungsform setzt man die Treibmittel zusammen mit einem oder mehreren der oben genannten Hilfs- und Zusatzstoffe ein. Ein weiterer Gegenstand der Erfindung sind somit zur Herstellungskomponenten zur Herstellung geschäumter Kunststoffe, die auf einem zur Verschäumung effektiven Gehalt des erfindungsgemäßen Gemisches als Treibgas und mindestens einem der vorstehend genannten Hilfs- und Zusatzmittel basieren. Das erfindungsgemäße Treibmittel ist dann bevorzugt in einer Menge von 1 bis 35 Gew.-%, das oder die Hilfs- und Zusatzmittel als Rest auf 100 Gew.-% enthalten.

Eine bevorzugte Herstellungskomponente sind Vormischungen aus erfindungsgemäßem Treibmittel und Polyesterpolyol- und/oder Polyetherpolyolen. Diese Ausführungsform wird im folgenden weiter erläutert.

Es ist üblich, zur Schaumherstellung zunächst aus den verschiedenen Einsatzstoffen sogenannte Vormischungen herzustellen, die dann mit dem Isocyanat zur Reaktion gebracht werden. Zur Herstellung der Vormischung werden Polyole oder Polyether, Treibmittel, Katalysatoren und gegebenenfalls weitere Additive in den benötigten Mengen miteinander vermischt. Die Schäume werden dann durch Inkontaktbringen der Vormischung mit dem Isocyanat bzw. Isocyanaten hergestellt.

Werden Vormischungen unter Verwendung von den genannten Treibmittelmischungen hergestellt, kann es bei Überschreitung einer kritischen Treibmittelmenge überraschenderweise dazu kommen, daß das gesamte System aufgrund des niedrigen Flammpunktes als brennbar einzustufen ist, obwohl Treibmittelmischung und Polyolsystem für sich nicht brennbar sind.

Erfindungsgemäße Vormischungen enthalten Polyol sowie 1 bis 35 Gew.-%, vorzugsweise 5 bis 20 Gew.-% des erfindungsgemäßen Treibmittels. Die Vormischungen können aus Treibmittel und Polyol bestehen, es können aber auch noch ein oder mehrere der vorstehend genannten Hilfs- und Zusatzstoffe in einer Menge von z. B. 10 bis 30 Gew.-% enthalten sein. Treibmittel, Polyol und gegebenenfalls vorhandene Hilfs- und Zusatzstoffe addieren sich zu 100 Gew.-% in der Vormischung. Vorzugsweise werden Polyetherpolyole oder Polyesterpolyole eingesetzt.

Es können beispielsweise 10 bis 20 Gew.-%, vorzugsweise 10 bis 15 Gew.-% einer Phosphorverbindung, vorzugsweise Triethylphosphat oder Tris-chlorisopropylphosphat, in der Vormischung enthalten sein.

Die erfindungsgemäße Herstellungskomponente bzw. Polyol-Vormischung wird dann in bekannter Art und Weise mit dem Isocyanat bzw. den Isocyanaten in Kontakt gebracht und verschäumt.

Bei den Polyolen handelt es sich um Verbindungen mit mindestens 2 gegenüber Isocyanaten reaktionsfähigen Wasserstoffatomen. Es handelt sich insbesondere um Verbindungen mit einem Molekulargewicht von 400 bis 10.000, welche vorzugsweise 2 bis 8 Hydroxylgruppen aufweisen und außerdem Aminogruppen, Thiolgruppen oder Carboxylgruppen aufweisen können.

Die erfindungsgemäße Vormischung ist gegenüber bekannten Vormischungen noch sicherer bezüglich der Flammfestigkeit. Somit ist eine einfache Lagerung und Transport der Vormischung möglich.

Ein weiterer Gegenstand der Erfindung sind unter Verwendung der erfindungsgemäßen Treibmittelmischung hergestellte Schaumkunststoffe.

Die folgenden Beispiele sollen die Erfindung weiter erläutern, ohne sie in Ihrem Umfang einzuschränken.

### Beispiele

### Beispiel 1:

### Polyolmischung

Polyetherpolyol (Tercarol A350) wurde mit 10 Gew.-% Treibmittel (bezogen auf Polyol) gemischt und der Flammpunkt bestimmt. Als Treibmittel wurde ein ternäres Gemisch bestehend aus 80 Gewichtsteilen HFC-365mfc und HFC-227ea (Gewichtsverhältnis 87:13) und 20 Gewichtsteilen 1,1,1,3,3-Pentafluorpropan eingesetzt. Flammpunkt nach DIN EN ISO 13736: 15 °C.

### Beispiel 2:

### Verwendung von HFC-134a

Eine Vormischung wurde analog Beispiel 1 aus Polyetherpolyol (Tercarol A350) und 10 Gew.-% ternärem Treibmittelgemisch hergestellt. Statt des Fluorpropans war HFC-134a enthalten. Der Flammpunkt wurde nach DIN EN ISO 13763 bestimmt. Es konnte kein Flammpunkt ermittelt werden.

## Patentansprüche

1. Treibmittelmischung, enthaltend oder bestehend aus
A) 1,1,1,3,3-Pentafluorbutan und
B) 1,1,1,2,3,3,3-Heptafluorpropan und
C) 1,1,1,2-Tetrafluorethan und/oder 1,1,1,3,3-Pentafluorpropan,
mit den folgenden Maßgaben :
a) pro 100 Gewichtsteile der Treibmittelmischung entfallen 65 bis 85 Gewichtsteile auf die Summe der Komponenten A) und B);
b) pro 100 Gewichtsteile der unter a) genannten Summe der Komponenten A) und B) entfallen 80 bis 95 Gewichtsteile auf 1,1,1,3,3-Pentafluorbutan, der Rest der Summe von A) und B) wird von 1,1,1,2,3,3,3-Heptafluorpropan gebildet;
c) pro 100 Gewichtsteile der Treibmittelmischung entfallen mindestens 15 Gewichtsteile auf die Komponente C).

2. Treibmittelmischung nach Anspruch 1, **dadurch gekennzeichnet, dass** sie aus den Komponenten A), B) und C) besteht, wobei pro 100 Gewichtsteile der Treibmittelmischung 70 bis 80 Gewichtsteile auf die Summe der Komponenten A) und B) entfallen und 20 bis 30 Gewichtsteile auf die Komponente C).

3. Herstellungskomponente für die Herstellung von Schaumkunststoffen, **dadurch gekennzeichnet, dass** sie eine Treibmittelmischung gemäß einem der Ansprüche 1 und 2 in einer Menge von 1 bis 35 Gewichtsprozent und Hilfsmittel oder Vorprodukte wie Flammschutzmittel oder Katalysatoren, als Rest auf 100 Gew.-% enthält.

4. Polyether- und/oder Polyesterpolyol-Vormischung zur Herstellung von Schaumkunststoffen, **dadurch gekennzeichnet, dass** die Vormischung 1 bis 35 Gew.-% des Treibmittels gemäß einem der Ansprüche 1 und 2 enthält.

5. Polyether- und/oder Polyesterpolyol-Vormischung nach Anspruch 4, **dadurch gekennzeichnet, dass** die Vormischung 5 bis 20 Gew.-% des Treibmittelgemisches enthält.

6. Schaumkunststoffe, erhältlich unter Verwendung einer Treibmittelzusammensetzung nach einem der Ansprüche 1 oder 2.

## Claims

1. A blowing-agent mixture, containing or consisting of
A) 1,1,1,3,3-pentafluorobutane and
B) 1,1,1,2,3,3,3-heptafluoropropane and
C) 1,1,1,2-tetrafluoroethane and/or 1,1,1,3,3-pentafluoropropane,
with the following provisos :
a) per 100 parts by weight of the blowing-agent mixture, 65 to 85 parts by weight are allotted to the total of constituents A) and B);
b) per 100 parts by weight of the total of the constituents A) and B) mentioned under a), 80 to 95 parts by weight are allotted to 1,1,1,3,3-pentafluorobutane, and the remainder of the total of A) and B) is formed by 1,1,1,2,3,3,3-heptafluoropropane;
c) per 100 parts by weight of the blowing-agent mixture, at least 15 parts by weight are allotted to constituent C).

2. A blowing-agent mixture according to Claim 1, **characterised in that** it consists of the constituents A), B) and C), with 70 to 80 parts by weight being allotted to the total of constituents A) and B) and 20 to 30 parts by weight to constituent C) per 100 parts by weight of the blowing-agent mixture.

3. A production constituent for the production of plastics foams, **characterised in that** they contain a blowing-agent mixture according to one of Claims 1 and 2 in an amount of from 1 to 35 percent by weight and auxiliaries or intermediate products such as flameproofing agents or catalysts, as remainder to make up to 100 % by weight.

4. A polyether and/or polyester polyol premix for the production of plastics foams, **characterised in that** the premix contains 1 to 35 % by weight of the blowing agent according to one of Claims 1 and 2.

5. A polyether and/or polyester polyol premix according to Claim 4, **characterised in that** the premix contains 5 to 20% by weight of the blowing agent.

6. Plastics foams, obtainable using a blowing-agent composition according to one of Claims 1 or 2.

## Revendications

1. Mélange d'agent gonflant qui contient ou qui est constitué de
A) 1,1,1,3,3-pentafluorobutane et
B) 1,1,1,2,3,3,3-heptafluoropropane et
C) 1,1,1,2-tétrafluoroéthane et/ou 1,1,1,3,3-pentafluoropropane,
avec les conditions suivantes :
a) pour 100 parties en poids du mélange d'agent gonflant, 65 à 85 parties en poids sont attribuées à la somme des composants A) et B) ;
b) pour 100 parties en poids de la somme des composants A) et B) mentionnée en a), 80 à 95 parties en poids sont attribuées à 1,1,1,3,3-pentafluorobutane, le reste de la somme de A) et B) étant constitué de 1,1,1,2,3,3,3-heptafluoropropane ;
c) pour 100 parties en poids du mélange d'agent gonflant, au moins 15 parties en poids sont attribuées à composant C).

2. Mélange d'agent gonflant selon la revendication 1, **caractérisé en ce qu'**il est constitué des composants A), B) et C), pour 100 parties en poids du mélange d'agent gonflant, 70 à 80 parties en poids sont attribuées à la somme des composants A) et B) et 20 à 30 parties en poids à composant C.

3. Composant de fabrication pour la fabrication de matières plastiques cellulaires, **caractérisé en ce qu'**il contient un mélange d'agent gonflant selon l'une quelconque des revendications 1 et 2 en une quantité de 1 à 35 pourcent en poids et des adjuvants ou des précurseurs tels que des agents ignifuges ou des catalyseurs, en quantité suffisante pour atteindre 100 % en poids.

4. Prémélange de polyéther et/ou polyester polyol pour la fabrication de matières plastiques cellulaires, **caractérisé en ce que** le prémélange contient 1 à 35 % en poids de l'agent gonflant selon l'une quelconque des revendications 1 et 2.

5. Prémélange de polyéther et/ou polyester polyol selon la revendication 4, **caractérisé en ce que** le prémélange contient 5 à 20 % en poids du mélange d'agent gonflant.

6. Matière plastique cellulaire, pouvant être obtenue en utilisant une composition d'agent gonflant selon l'une quelconque des revendications 1 ou 2.
